# EUROPEAN PATENT APPLICATION

(11) **EP 4 600 705 A1**
(43) Date of publication of application: **13.08.2025**
(21) Application number: 24157059.7
(22) Date of filing: 12.02.2024
(51) Int. Cl.: G01W 1/00, G01W 1/10, G06N 3/088, G06N 5/02, G06Q 50/06, H04L 67/12

(54) **METHOD AND SYSTEM TO PROVIDE MISSION SPECIFIC CONTROL DATA TO VESSEL**

(71) Applicant: AWAKE.AI OY, 20520 Turku (FI)
(72) Inventor: Tenovuo, Karno, 20520 Turku (FI)
(74) Representative: Moosedog Oy

(57) **Abstract**

Disclosed is method for providing mission specific control data to a vessel (202). The method comprises obtaining data related to mission, wherein mission comprises one or more tasks; utilizing obtained data for generating emission prediction model for one or more tasks using artificial intelligence (AI) tool; calculating emission units for one or more tasks, wherein emission units are calculated based on at least one of: profile of each task from amongst one or more tasks, vessel profile, predicted environmental profile associated with each of one or more tasks, emission data obtained during one or more tasks; generating control data for one or more tasks, wherein control data is generated based on at least one of: generated emission prediction model, calculated emission units; and providing generated control data to vessel. Disclosed also is system to provide mission specific control data to vessel.

## Description

### TECHNICAL FIELD

The present disclosure relates to methods for providing mission specific control data to vessels. Moreover, the present disclosure relates to systems to provide mission specific control data to vessels. Moreover, the present disclosure relates to computer program products comprising non-transitory machine readable data storage mediums having stored thereon program instructions to execute steps of the aforementioned methods.

### BACKGROUND

Maritime transportation plays a vital role in global trade. In this regard, the maritime transportation facilitates international trade, connecting distant regions, and transporting goods crucial for economic activities. Examples of maritime transportation include oil tankers for transporting crude oil, bulk carriers for bulk cargo like coal, passenger ships such as cruise liners, fishing trawlers for seafood harvesting, ro-ro ships for transporting vehicles, and so forth. However, the maritime transportation also contributes significantly to environmental pollution. For example, the ships release various harmful emissions, including carbon dioxide (CO₂), nitrogen oxides (NOₓ), sulfur oxides (SOₓ), and particulate matter (PM). Such harmful emissions impact air quality and contribute to climate change, such as global warming. Thus, reducing the emissions from a ship or its associated tasks has become a crucial challenge for the maritime industry.

Existing approaches for managing ship emissions primarily rely on historical data and static regulations. In such a case, the emission regulations often set limits based on engine types or fuel consumption by the ship, but fail to account for the dynamic factors influencing emissions during specific missions and tasks. This leads to suboptimal emission management and limited potential for optimization.

Furthermore, existing emission trading systems, while providing a market-based approach to emission reduction, lack real-time prediction and integration with the vessel operations. Current systems rely on post-factum reporting and trading of emission credits, hindering proactive planning and optimization of mission-specific emissions.

Therefore, in light of the foregoing discussion, there exists a need to overcome the aforementioned drawbacks.

### SUMMARY

The aim of the present disclosure is to provide a method and a system that employ artificial intelligence (AI) technology for optimizing vessel emissions per port call basis during the mission, thus fostering compliance and sustainability in maritime transportation. The aim of the present disclosure is achieved by a method and a system to provide a mission specific control data to a vessel as defined in the appended independent claims to which reference is made to. Advantageous features are set out in the appended dependent claims.

Throughout the description and claims of this specification, the words *"comprise", "include", "have",* and *"contain"* and variations of these words, for example *"comprising"* and *"comprises",* mean *"including but not limited to",* and do not exclude other components, items, integers or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 is an illustration of a flowchart depicting steps of a method for providing a mission specific control data to a vessel, in accordance with an embodiment of the present disclosure;
FIG. 2 is an illustration of a block diagram of a system to provide a mission specific control data to a vessel, in accordance with an embodiment of the present disclosure;
FIG. 3 is an exemplary illustration of a mission of sailing a vessel from a departure location to a destination location, in accordance with an embodiment of the present disclosure; and
FIG. 4 is an illustration of an exemplary environment of a system to provide a mission specific control data to a vessel, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a method for providing a mission specific control data to a vessel, the method comprising:
- obtaining data related to the mission, wherein the mission comprises one or more tasks;
- utilizing the obtained data for generating an emission prediction model for the one or more tasks using an artificial intelligence (AI) tool, which has been trained using at least one of: historical emission data of a previous task, emission data obtained during the one or more tasks, a historical environmental profile associated with the previous task, and a vessel profile;

- calculating emission units for the one or more tasks, wherein the emission units are calculated based on at least one of: a profile of each task from amongst the one or more tasks, the vessel profile, a predicted environmental profile associated with each of the one or more tasks, the emission data obtained during the one or more tasks;
- generating control data for the one or more tasks, wherein the control data is generated based on at least one of: the generated emission prediction model, the calculated emission units; and
- providing the generated control data to the vessel.

The aforementioned method provides the mission-specific control data to the vessel by AI-based prediction of emissions from the vessel and associated tasks thereof during the mission. The robust emission prediction is based on a comprehensive data related to the mission, including the historical emission data, the environmental profiles, and the vessel-specific information. The utilization of the artificial intelligence (AI) tool enhances the accuracy of predictions by learning from historical emission patterns and the real-time data obtained during the one or more tasks. Moreover, the calculation of emission units ensures a precise assessment of the emission units needed for the mission that enable vessel operators to make informed decisions for emission optimization. Beneficially, optimizing emissions during maritime missions contributes significantly to environmental sustainability and operational efficiency.

In a second aspect, the present disclosure provides a computer program product comprising a non-transitory machine readable data storage medium having stored thereon program instructions that, when executed by a processor, cause the processor to execute steps of the aforementioned method.

In a third aspect, the present disclosure provides a system to provide a mission specific control data to a vessel, the system comprising:
- a logistics data platform for providing data related to the mission;
- an artificial intelligence tool configured to obtain the data related to the mission and utilize the obtained data to generate an emission prediction model;
- a calculating unit to calculate emission units;
- a control data generating unit to generate control data based on at least one of: the generated emission prediction model, the calculated emission units, and
- a communication arrangement to communicate the control data to the vessel.

The aforementioned system combines multiple data sources and artificial intelligence too (or technologies) to receive and process data to efficiently and accurately predict emissions generated by the vessel during the mission. The system further precisely computes emission units by considering various factors, and generates control data to mitigate the emission. The system ensures a seamless interaction between various data sources and computational elements, facilitating the timely delivery of control data to the vessel. Collectively, the aforementioned components of the system enable the vessel to dynamically respond to environmental considerations, optimize emissions, and enhance overall operational efficiency thereof.

Throughout the present disclosure, the term *"mission"* as used herein refers to a specific journey or expedition undertaken with a defined objective. Optionally, the mission includes for example one or more departure or destination locations, a set of planned activities or tasks, and a timeline for completion. Optionally, the mission comprises sailing the vessel from the departure location to the destination location. The term *"vessel"* as used herein refers to a range of waterborne vehicles that are capable of navigating on the water, for various purposes, such as transportation, commerce, exploration, research, and military operations. The vessels often vary widely in size, shape, and purpose. The vessel may include cargo ships (transporting goods and commodities), passenger cruise ships (provide luxurious accommodations and amenities for passengers), fishing vessels (catching and processing fish), research vessels (scientific exploration in fields such as oceanography, marine biology, and geology), naval ships (military vessels, including aircraft carriers, destroyers, and submarines used for defence, security, and strategic purposes), sailboats (including yachts and catamarans for recreation, racing, or long-distance cruising), ferries (transport passengers and vehicles different ports), tanker ships (transport liquid cargo, such as oil, chemicals, or liquefied natural gas (LNG)), icebreakers (navigate through ice-covered waters, ensuring safe passage for other ships and facilitating polar research missions), submarines (underwater operations including defence and surveillance), humanitarian aid ships (delivers humanitarian aid and relief supplies to areas affected by natural disasters or conflicts), and other floating craft.

During a mission, the vessel (or ship) is required to travel a specific route between the departure location and the destination location. For example, the mission of sailing the vessel from a departure location A to a destination location E via multiple planned points, e.g., B, C and D, wherein at such one or more points the vessel may be anchored or docked to a port at that point, take a halt, or perform one or more tasks for which the vessel was set out on the sailing mission, and so on, before it reaches the point E to complete the mission.

Pursuant to the embodiments of the present disclosure, the method comprises obtaining data related to the mission, wherein the mission comprises one or more tasks. Herein, the term *"data"* refers to information required in the course of achieving the objectives of the mission. Optionally, the data related to the mission is obtained in real-time or from historical data associated with the vessel and the mission. In this regard, the data related to the mission may be obtained from any one of: sensors, instruments, communication systems, official records of the mission, a combination of these.

Optionally, the data related to the mission comprises at least one of: departure location, destination location, target arrival time to the destination location, target departure time from the departure location, needed time in the destination location, logistics support needed during the time in the destination location. Optionally, the departure and destination locations may be obtained as geographic coordinates, city names, or specific addresses. Moreover, the target departure and arrival times as well as the needed time and logistics support in the destination location are obtained for scheduling and coordination of various planned one or more tasks during the mission. Beneficially, the data related to the mission enables the operator of the mission as well as other parties (namely, passengers, owners and customers of the load, facilitators of the mission, etc.) associated with the mission to understand temporal and spatial aspects of the mission for making informed decisions related to effective resource allocation, risk management, and achieving other objectives of the mission.

Herein, the term *"task"* refers to a specific action or activity that is assigned to or undertaken by the vessel to achieve a particular objective of its mission. Optionally, the one or more tasks may be individual tasks or segments of a set of tasks. Notably, the one or more tasks of the vessel during its sailing mission may vary depending on nature of the mission, type of the vessel, and the mission objectives. Optionally, the one or more tasks include, but do not limit to, navigation (through planned/unplanned routes and ensuring safe passage), communication (with other vessels, ports, and maritime authorities), cargo handling (loading/offloading), passenger handling (embarking/disembarking), watchkeeping (to ensure correct navigation, safety, and so on), weather monitoring (adjust their course or speed according to weather updates and forecasts to navigate), record keeping (including navigation logs, maintenance records, and cargo manifests), and maintenance (of mechanical, electrical, and navigational systems of the vessel or other vessels).

Moreover, the method comprises utilizing the obtained data for generating an emission prediction model for the one or more tasks using an artificial intelligence (AI) tool, which has been trained using at least one of: historical emission data of a previous task, emission data obtained during the one or more tasks, a historical environmental profile associated with the previous task, and a vessel profile. The term *"emission prediction model"* as used herein refers to a computational tool or system designed to estimate or forecast the amount of pollutants or greenhouse gases (namely, emission) that will be released into the atmosphere over a specific period during the mission, by the vessel. In this regard, the emission prediction model is based on a range of input parameters, including transportation patterns, meteorological conditions, and so on, that influence the release of pollutants, as well as AI-based modelling techniques. Beneficially, the AI tool leverages machine learning techniques to analyze patterns and relationships within the obtained data to make predictions about future emissions.

In this regard, the emission prediction model is generated based on the historical and real-time emission data during past tasks and current tasks, the historical environmental profile, including weather patterns, sea conditions, and air quality, associated with the past tasks, and the vessel profile including engine specifications, fuel types used, maintenance records, and operational characteristics by employing AI tools. The environmental profile refers to the environmental conditions and impacts associated with specific mission or tasks during the mission. Optionally, the environmental profile is based on at least one of: weather conditions (such as wind speed and direction, atmospheric pressure, temperature variations), sea conditions (such as wave height and frequency, current strength and direction, sea temperature, marine ecosystem), air quality (such as concentrations of air pollutants, ozone, volatile organic compounds), and so on.

Notably, the vessel profile relates to a set of characteristics, specifications and operational details of the vessel that are essential to be monitored during the mission. Optionally, the vessel profile is selected from: basic information (such as name, registration number, identification details, ownership and operator's details, compliance and certification data), a type thereof (such as cargo ship, passenger cruise ship, fishing vessel, and so on), physical characteristics (such as hull type and material, size), propulsion system (such as engine specifications (such as diesel engine, electric motor driven, sail, etc.), fuel data, emission data), operational parameters (such as maximum and cruising speed, capacity for cargo, passengers, etc.), on-board systems (such as navigation equipment, communication equipment, safety equipment, and so on), maintenance records, past travel records, and so on. The fuel data typically includes a type of fuel, an amount of fuel, a flow rate of fuel, and a combustion time of fuel. Notably, the route (historical or planned) and the fuel data are combined to determine one or more tasks for a mission for any given vessel. Notably, different fuel types have different emission potential as a result of particulate emissions (such as black carbon soot) and water vapor (a by-product of the combustion process). In an example, diesel-based fuel has an emission characteristic different from electric motor-based fuel.

Optionally, the method comprises employing an AI tool for generating the vessel profile for all possible situations, in-advance or in-real-time.

Optionally, the different situations include, but do not limit to, the vessel sailing in the sea, arranged at the dock to accomplish the one or more task (such as loading/unloading etc.), at the anchor. The vessel profile is then used along with measurement data and other information for generating the emission prediction model for the one or more tasks.

Beneficially, based on the historical emission data and/or real-time emission data, the historical and/or real-time environmental profile and the vessel profile, the AI tool generates the emission prediction model for the vessel for each port call (namely, task), to predict emissions on a per-port call basis and, potentially also differentiated and predicted for each port call service to execute the one or more tasks at that port. Moreover, by leveraging historical and real-time emission data along with the vessel profile and the historical and real-time environmental profile, the emission prediction model offers accurate and dynamic predictions of emissions associated with the one or more tasks, and allowing the decision-makers of the mission to plan and optimize the one or more tasks while considering environmental impact and mission objectives for a sustainable mission.

Optionally, the method comprises generating the emission prediction model by utilizing at least one of: fuel consumption of the vessel, speed of the vessel, emission factor associated with the vessel. Herein, the fuel consumption of the vessel, the speed of the vessel, the emission factor associated with the vessel are key (or critical) features or variables selected for predicting emissions, as such features directly influence the amount and type of pollutants released into the environment. It may be appreciated that the aforementioned data may be obtained directly or estimated/inferred by the obtained data related to the mission. Notably, the fuel consumption refers to an amount of fuel burned by a vessel in its engine to release carbon dioxide (CO₂), nitrogen oxides (NOₓ), sulfur oxides (SOₓ), particulate matter (PM), and other pollutants, that impact the environment during the mission. Notably, the speed of the vessel inversely influences engine efficiency, i.e., higher speeds generally result in increased fuel consumption, leading to higher emissions, and engine efficiency is often reduced at high speeds, leading to a less favourable fuel-to-power ratio. The term *"emission factor"* refers to an amount of pollutants emitted per unit of fuel burned. It is specific to the type of vessel, the engine technology, and the fuel used, thus different vessel types and engine configurations have different emission factors. Beneficially, by considering fuel consumption, vessel speed, and the emission factor associated with the vessel, the emission prediction model accurately predicts emissions by the vessel for regulatory compliance, assessing environmental impact, and making informed decisions to balance operational efficiency and environmental sustainability during the mission.

Optionally, the method comprises measuring the fuel consumption of the vessel and the speed of the vessel in real-time. In this regard, the method employs various sensors, measurement instruments, and/or data collection systems for measuring the fuel consumption of the vessel and the speed of the vessel in real-time. In an example, the method may employ a fuel flow sensor arranged at an entry point of the vessel's fuel supply line to measure the rate of flow of the fuel therethrough to determine the fuel consumption therefrom. In another example, the method may employ a Global Positioning System (GPS) sensor to determine the vessel speed by tracking its movement. Beneficially, real-time measurement of a combination of the fuel consumption and the speed of the vessel allows for operational optimization, regulatory compliance, and environmental impact assessments.

Optionally, the method comprises pre-processing the obtained data to remove any anomalies and transform the data into a suitable format for the AI tool. Optionally, the method also comprises evaluating the AI tool's performance using a separate set of data not used during training (validation set) and fine-tuning the AI tool to ensure it generalizes well to different scenarios and vessels.

Optionally, the AI tool may include linear regression, decision trees, or ensemble methods like random forests. Optionally, the emission prediction model may include for example the Integrated Assessment Modelling (IAM) framework, the Emission Prediction and Policy Analysis (EPPA) model, and regional air quality models such as the Community Multiscale Air Quality (CMAQ) model, and so on. Optionally, the generated emission prediction model may be integrated with other environmental models, such as air quality models or climate models, to provide a more comprehensive understanding of the interactions between emissions and the environment.

Furthermore, the method comprises calculating emission units for the one or more tasks, wherein the emission units are calculated based on at least one of: a profile of each task from amongst the one or more tasks, the vessel profile, a predicted environmental profile associated with each of the one or more tasks, the emission data obtained during the one or more tasks. Herein, the term *"emission unit"* refers to a measure of amount of emissions (namely, pollutants or greenhouse gases) released into the atmosphere by a specific activity or process, such as by the vessel during its sailing mission. Optionally, such emissions include pollutants such as carbon dioxide (CO₂), nitrogen oxides (NOₓ), sulfur oxides (SOₓ), and particulate matter. Optionally, the emission units for a given emission may be expressed in terms of mass (such as metric tons or kilograms or a similar metric) of the given emission emitted into the atmosphere, to normalize the emissions based on the amount of cargo transported or the distance travelled by vessels or tasks performed thereon/thereby. Moreover, for trace gases like certain pollutants or greenhouse gases, the emission units may be measured in parts per million or parts per billion.

Optionally, such emissions may result from the fuel combustion in the vessel's engine. Typically, when burning 1000 kg (1 ton) of fuel (such as crude oil that is typically used in cargo ships), approximately 3135 kg (or about 3.14 tons) of CO₂ gas is emitted by the vessel in the atmosphere. Beneficially, the emission units allow for monitoring, reporting, and verifying compliance of vessel's operations with environmental regulations and standards that require the Governments, industries, and organizations to often set emission reduction targets or limits to reduce the overall impact on air quality, human health, and the global climate.

Optionally, the profile of each task from amongst the one or more tasks, the vessel profile, the predicted environmental profile associated with each of the one or more tasks, the emission data obtained during the one or more tasks may be real-time measurements or historical data from a past task or mission. Herein, the term *"profile of each task"* refers to unique characteristics associated with a specific task, such as operational aspects (such as type of task (cargo transport, research expedition, fishing, etc.); distance to be covered during the task; expected duration of the task; arrival deadlines or scheduling constraints; speed requirements or constraints during different phases of the task), requirements (such as any special handling requirements or conditions; defined planned route or navigation path, waypoints, ports of call, relevant maritime regulations and compliance requirements for the task; fuel and energy requirements for the task; adherence to safety, environmental, and operational regulations; any logistical requirements for the task (e.g., support vessels, supplies); maintenance or service needs during the task; any specialized technologies or equipment required for the task), and environmental considerations (such as sea conditions, wind patterns, and potential environmental challenges) of each task that the vessel is configured to perform. These characteristics directly impact the fuel consumption and, consequently, the emissions during the task. Moreover, the predicted environmental profile includes information about environmental conditions during each task, such as weather, sea conditions, and air quality, that can affect the vessel's performance and, subsequently, its emissions. For example, fuel combustion efficiency may vary based on wind conditions or sea currents. Notably, real-time emission data may be used to verify the accuracy of predicted environmental profiles and can be used to refine the emission prediction models.

Optionally, the emission units are CO₂ emission units. The CO₂ emission units typically refer to a measure of the environmental impact associated with the release of carbon dioxide (CO₂), a significant greenhouse gas contributing to climate change. The CO₂ emission units may be expressed in relation to a specific metric, such as the distance traveled, energy produced, or goods transported. In an example, the CO₂ emission units are measured as tons of CO₂ per kilometre distance travelled by the vessel. In another example, the CO₂ emission units are measured as grams of CO₂ emitted per ton-kilometer (g CO₂/ton-km). For example, if a vessel emits 100 grams of CO₂ per ton-kilometer, it means that for each ton of cargo transported over one kilometer, 100 grams of CO₂ is released into the atmosphere by that vessel.

Optionally, the emission units are CO₂ equivalent (CO₂e) emission units. The CO₂e emission units are often used to express the total global warming potential of various greenhouse gases in terms of the amount of carbon dioxide that would have the same impact over a specified period. Alternatively, the emission units are NOₓ emission units, SOₓ emission units and/or particulate matter emission units. Similar to CO₂ emission units, the NOₓ emission units, SOₓ emission units and particulate matter (PM) emission units are expressed as metric tons (or kilograms) of nitrogen oxides, sulfur oxides and particulate matter, respectively. For example, the NOₓ emission units, SOₓ emission units and PM emission units are expressed as grams of NOₓ emitted per ton-kilometer (g NOₓ/ton-km), grams of SOₓ emitted per ton-kilometer (g SOₓ/ton-km) and grams of PM emitted per ton-kilometer (g PM/ton-km), respectively.

Optionally, the method comprises:
- forecasting, using the emission prediction model, emission units for at least one task, and
- generating one or more proposals, to optimize the emission units usage, based on the forecasted emission units.

In this regard, the emission prediction model predicts or forecasts at least one of: CO₂ and/or CO₂e emission units, NOₓ emission units, SOₓ emission units and/or particulate matter emission units, for a given task from amongst the one or more tasks. It may be appreciated that different tasks may require different emission units. Moreover, it may be appreciated that the at least one task may be a critical task that is required to be performed at a specific port at a specific time. In such case, the emission units associated with such at least one critical task may be high or low compared to other tasks which may not be very time-specific and/or port-specific critical. For such at least one non-critical task, the method proposes an alternative mode of performing the given task such that the at least one non-critical task requires less emission units. In this regard, the method comprises recommending at least one action to the vessel (or the operator of the vessel) that minimizes emission unit usage by the vessel, such as by proposing an alternative route for the vessel that is different from the planned route, or changing a duration of vessel's stay in harbor/docking/holding on sea, etc. It may be appreciated that the forecasting and generating of the one or more proposals is performed in real-time.

Referring to the above example, i.e., sailing of the vessel from point A to E via points B, C and D, the method may propose the vessel to take an alternative route, distinct from a planned route, from the point B to reach the point C where the vessel anchors at the sea for a certain duration of time. It may be appreciated that the proposed alternative route requires less emission units as compared to the planned route to reach the point C. Alternatively, the method may propose an alternative anchoring point C1, instead of the point C. In such case, the vessel may take another alternative route, distinct from the planned route or the alternative route, from the point B to reach the point C1. It may be appreciated that at all the abovementioned points A, B, C, C1, D and E, for example, and at all other instances during the mission, the vessel consumes a certain amount of emission units, such as when engine of the vessel uses fuel and generates emissions, additional emission units required by one or more tasks, additional services or service providers required during the one or more tasks, and so on. It may be appreciated that the proposed alternative anchoring point C1 requires less emission units as compared to the planned anchoring point C. Additionally, herein, the method suggests C1 as the best anchoring location and proposes a distinct duration of stay there as compared to that planned for the point C, to minimize the emissions. It may also be appreciated that the method may propose an alternative route or an alternative anchoring point, as in the above examples, during the mission based on a potential extremity in the specific route, such as unfavourable weather conditions, hinderances on the specific route, limitation of resources for sailing, and so on or unavailability of anchoring space on the planned ports/points.

Optionally, the method comprises selecting the one or more tasks having the least emission units. As mentioned above, the method ensures achieving mission's objectives while ensuring least environmental impact, and therefore, the tasks that require low emission units are selected. It may be appreciated that the one or more tasks may require additional service providers, such as subcontractors and others. Therefore, during the mission, the emissions of the vessels as well as the emissions associated with the services provided by subcontractors and other service providers together account for the emission units for a given task. Herein, the selected one or more tasks has the least emission units associated with the vessel, the task itself, and any service providers. In other words, one or more tasks altered based on the one or more proposals that optimize the emission units usage therefor and the service providers for which also require the least emission units is selected and required to be performed during the mission.

Referring to the above example, the method comprises selecting an alternative route for sailing of the vessel, for example a cargo ship, from point A to E via points B, C1 and D, as anchoring at the point C1 requires least emission units. Additionally, for the given task of off-loading cargo from the cargo ship, the emissions from the cargo ship account for the fuel combustion from the cargo ship at points A, B, C1 and D, wherein the points C1 and D are potential off-loading point/port. At the point D, the service providers require lower emission units (accounted by fuel combustion of the truck from its starting point to end point) for off-loading the cargo from the ship and loading it in a truck, as compared to the service providers at the point C1. Hence, the task at point D1 is selected that the accounts for the least total emission units associated with the given task.

Beneficially, selecting the one or more tasks having the least emission units emphasizes the importance of considering the emissions associated with subcontractors and other service providers, leveraging emission predictive models to anticipate and optimize these emissions, and providing actionable recommendations for sustainable and efficient practices throughout the supply chain within the shipping industry.

Optionally, the method comprises linking the calculated emission units to an emission trading system. Herein, linking the calculated emission units to an emission trading system involves integrating the emission units derived from one or more tasks into an emission trading system. Optionally, linking may involve reporting the emission units to a regulatory authority overseeing the emission trading system and registering the emission units for trading purposes. Optionally, linking may involve collaboration between different jurisdictions (international or regional). The *"emission trading system"* refers to a market-based approach designed to control and reduce emissions, such as greenhouse gas (GHG) emissions. The emission trading system typically provides economic incentives for industries to reduce their emissions of pollutants that contribute to climate change. In this regard, the emission trading system sets an overall limit or "cap" on the total amount of emissions allowed within a specific jurisdiction or industry sector, to align such jurisdictions and/or industries with environmental goals to combat climate change. Under these caps, the emission trading system issues a specific number of tradable emission allowances or emission units, each representing the right to emit a certain quantity of pollutants, typically measured in metric tons of carbon dioxide equivalent (CO₂e). The emission trading system allows trading of emission units between industries allowing companies that can reduce emissions more easily or at a lower cost to sell their excess emission units to those facing challenges in emission reduction. Industries that exceed their allocated emission units and do not acquire additional emission units through trading may be required to either reduce their emissions or purchase additional emission units.

Beneficially, linking calculated emission units to the emission trading system enables integrating emission-related data into a central database where entities can trade emission units, creating a more interconnected and efficient system for achieving emission reduction goals.

Optionally, the method comprises pre-reserving a pre-defined amount of emission units, from the emission trading system, for the selected task. In this regard, the vessel operator submits a request to pre-reserve a pre-defined amount of emission units for a sailing mission to the relevant emission trading system or with the regulatory authority or the designated entity overseeing the emission trading system. Optionally, the pre-defined amount of emission units for the selected task may be pre-reserved based on a forecast of the emission unit by the emission prediction model. Alternatively, the pre-defined amount of emission units for the selected task may be pre-reserved based on a historical data of the selected task performed by the vessel in the past. Beneficially, pre-reserving the pre-defined amount of emission units offers flexibility and operational certainty for the vessel, ensuring that they have the required emission units readily available when needed. Moreover, the pre-reserving the pre-defined amount of emission units aligns with strategic planning, compliance commitments, and risk management strategies to facilitate smoother operations of the vessel. It may be appreciated that the emission trading system allocated the pre-defined amount of emission units to the vessel after verifying the anticipated emissions thereby, such as by employing a third-party for the verification process. In an example, if while burning 1000 kg (1 ton) of crude oil by a cargo ship, approximately 3135 kg (or about 3.14 tons) of CO₂ gas is emitted in the atmosphere, and 1 CO₂ emission unit is equal to 1 ton of CO₂ gas, then the pre-defined amount of emission units for the selected task that may be pre-reserved is 3.1 or 3.5 or 4 CO₂ emission units, as allowed by the emission trading system of a jurisdiction where the selected task is being performed.

Optionally, after completing the selected task, the method further comprises confirming to the emission trading system that the pre-reserved emission units have been used. In this regard, the emission trading system is informed by the vessel (or the operator of the vessel) whether the pre-reserved emission units for the anticipated emissions associated with the selected task were sufficient, in-excess or in-deficit of the actual emissions. If the pre-reserved emission units for the selected task were in-excess, the emission trading system keeps aside the balance pre-reserved emission units for any other task or pools the balance pre-reserved emission units back in its account and provides financial incentives to the vessel. Referring to the above example, if the pre-reserved emission units for the selected task is 4 CO₂ emission units against 3.14 tons of CO₂ gas emission, then the balance of 0.86 is either used by the vessel for any other task or surrendered by the vessel back to the emission trading system. If the pre-reserved emission units for the selected task were in-deficit, the emission trading system allows the negative balance of the emission units to be bought by the vessel or traded with some other industry/company. Referring to the above example, if the pre-reserved emission units for the selected task is 3 CO₂ emission units against 3.14 tons of CO₂ gas emission, then the additional balance of 0.14 is to be bought by the vessel or adjusted during any other task.

Optionally, the method comprises automatically optimizing and pre-reserving the emission units. In this regard, the real-time data related to the mission, emission data, the updated emission prediction model and the real-time measurement of the emission units are used to anticipate emission units for a given task. Based on an updation of the requirement of emission units by the given task (including the emission units required by the vessel as well as the service providers, if any), the method links or optimizes the anticipated emission units with the emission trade system and the pre-defined amount of emission units are pre-reserved based on the optimized pre-reserved emission units. In an example, if the updated anticipated emission units are higher than initial anticipated emission units, the amount of pre-defined emission units is increased and linked or confirmed with the emission trade systems. Based on the jurisdictional regulations, the emission trade systems may accept or deny the request for such pre-reservation of the desired pre-defined emission units. In another example, if the updated anticipated emission units are lower than initial anticipated emission units, the extra amount of pre-defined emission units may be surrendered by the vessel with the emission trade systems, or adjusted during any other task of the mission.

Optionally, the method comprises optimizing and pre-reserving the emission units prior to execution of the one or more tasks of the mission. Beneficially, optimizing and pre-reserving the emission units prior to execution of the one or more tasks process ensures that a sufficient number of emission units are reserved in advance to cover the anticipated emissions from the planned tasks, when required without causing inconvenience to any parties involved in the supply chain.

Furthermore, the method comprises generating control data for the one or more tasks, wherein the control data is generated based on at least one of: the generated emission prediction model, the calculated emission units. The term *"control data"* as used herein refers to data used to manage and control the operation of a vessel. The control data may include parameters, settings, or instructions that controls the behavior of the vessel with the goal of minimizing emissions. Optionally, the control data is generated in real-time. In an example, the control data comprises adjusting the speed of the vessel based on the emission prediction model and the the calculated emission units, to optimize fuel efficiency and minimize emissions while meeting mission objectives. In another example, the control data comprises selecting the most fuel-efficient route based on real-time weather conditions and environmental factors. In yet another example, the control data comprises real-time monitoring of emissions during the mission for comparison with predictions to improve the emission prediction model. In yet another example, the control data comprises setting allowable limits for emissions based on regulatory requirements or environmental objectives.

Optionally, the method comprises dynamically updating the control data during the mission. Similar to optimizing the emission units for the one or more tasks of the mission, the method periodically updates the system with control data based on the generated emission prediction model, the calculated emission units to ensure that it remains accurate and relevant over time to ensure the vessel to adapt to changes during the mission. It may be appreciated that, beneficially, by dynamically updating the control data the system is refined, based on its performance and incorporating feedback from ongoing tasks during the mission, to improve prediction accuracy, both in terms of emission units prediction or planning the mission.

Furthermore, the method comprises providing the generated control data to the vessel. In this regard, the generated control data may be transmitted (in real-time or near-real-time) to the vessel's onboard systems or operator or crew to influence the operation of the vessel such that it aligns with emission reduction and optimization strategies. In this regard, the transmission means is integrated with the vessel to establish a communication link therebetween. It may be appreciated that the control data is transmitted in format understandable by the vessel so that it serves to provide actionable insights for the vessel.

Optionally, the method comprises utilizing the generated control data for at least one of: managing the selected task of the vessel, controlling the vessel. The generated control data is directed at managing the selected task to be performed with reduced emissions to align with compliance requirements, environmental regulations, and the pre-defined emission reduction strategies for each task. Moreover, the generated control data is directed at controlling the vessel to facilitate a continuous exchange of data between the vessel and associated systems for real-time monitoring of the mission and the environmental impact thereof. It may be appreciated that the transmission means use standardized communication protocols to enhance interoperability between the vessel and the associated systems, while protecting the integrity and confidentiality of the control data.

The present disclosure also relates to the computer program product as described above. Various embodiments and variants disclosed above, with respect to the aforementioned method apply mutatis mutandis to the computer program product.

Optionally, the computer program product is implemented as an algorithm, embedded in a software stored in the non-transitory machine-readable data storage medium. The non-transitory machine-readable data storage medium may include, but is not limited to, an electronic storage device, a magnetic storage device, an optical storage device, an electromagnetic storage device, a semiconductor storage device, or any suitable combination of the foregoing. Examples of implementation of the computer-readable medium include, but are not limited to, Electrically Erasable Programmable Read-Only Memory (EEPROM), Random Access Memory (RAM), Read Only Memory (ROM), Hard Disk Drive (HDD), Flash memory, a Secure Digital (SD) card, Solid-State Drive (SSD), a computer readable storage medium, and/or CPU cache memory.

The present disclosure also relates to the system as described above. Various embodiments and variants disclosed above with respect to the aforementioned method and computer program product apply mutatis mutandis to the system.

Herein the logistics data platform refers to a system designed to manage and share data related to the mission for strategic planning and execution and optimization of logistical tasks of the mission. In this regard, the logistics data platform integrates various data sources (such as sensors, devices, real-time measurement equipment, and so on), facilitates communication, and supports decision-making processes to enhance the efficiency and effectiveness of the mission. Optionally, the logistics data platform includes a real-time dashboard that displays a current status and progress of the mission; a geospatial mapping tool that allows for route planning and optimization; a weather and environmental data monitoring tool for providing latest information on sea conditions, wind patterns, and other environmental factors; vessel performance monitoring sensor arrangement.

Herein, the artificial intelligence (AI) tool employs machine learning algorithm (or techniques) to analyze historical data, real-time data, understand patterns, and create the emission prediction model for estimating emissions. Optionally, the machine learning algorithms are suitable for regression tasks, and may include for example linear regression, decision trees, random forests, or more advanced models like neural networks. The AI tool is trained based on the data related to the mission and other parameters of the vessel.

Herein, the calculating unit and the control data generating unit are at least one processor of the system. The term *"at least one processor"* as used herein refers to a computational element that is operable to respond to and processes instructions that drive the system. Optionally, the processor includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term *"processor"* may refer to one or more individual processors, processing devices and various elements associated with a processing device that may be shared by other processing devices. Additionally, the one or more individual processors, processing devices and elements are arranged in various architectures for responding to and processing the instructions that drive the system. In other words, the processor is a strategic organization and deployment of various servers and computing resources within a cloud infrastructure to support the operations of the system using a data communication network.

The term *"communication arrangement"* as used herein refers to means for communication between the various components of the system and the vessel, in order to receive and subsequently process the data related to the functioning of the system. Notably, the communication arrangement refers to an arrangement of interconnected, programmable and/or non-programmable components that, when in operation, facilitate data communication between one or more electronic devices and/or databases. Furthermore, the communication arrangement may include, but is not limited to, a peer-to-peer (P2P) network, a hybrid peer-to-peer network, local area networks (LANs), radio access networks (RANs), metropolitan area networks (MANs), wide area networks (WANs), all of or a portion of a public network such as global computer network known as the Internet^{®}, a private network, a cellular network and any other communication system. Additionally, the communication arrangement employs wired or wireless communication that can be carried out via one or more known protocols.

Optionally, the system comprises a user interface that allows users to input data related to the mission and receive emission predictions. Notably, the user interface provides clear reports and visualizations to communicate predicted emissions, contributing factors, and potential areas for emission reduction. Optionally, the user interface is associated with the communication arrangement.

Optionally, the control data is used to operate the vessel with a vessel computing unit. Herein, the vessel computing unit is configured to generate the vessel profile for all possible situations, in-advance or in-real-time. Optionally, the different situations include, but do not limit to, the vessel sailing in the sea, arranged at the dock to accomplish the one or more task (such as loading/unloading etc.), at the anchor. The vessel profile is then used along with measurement data and other information for generating the emission prediction model for the one or more tasks. Optionally, the vessel computing unit may employ an AI tool.

### DETAILED DESCRIPTION OF THE DRAWINGS

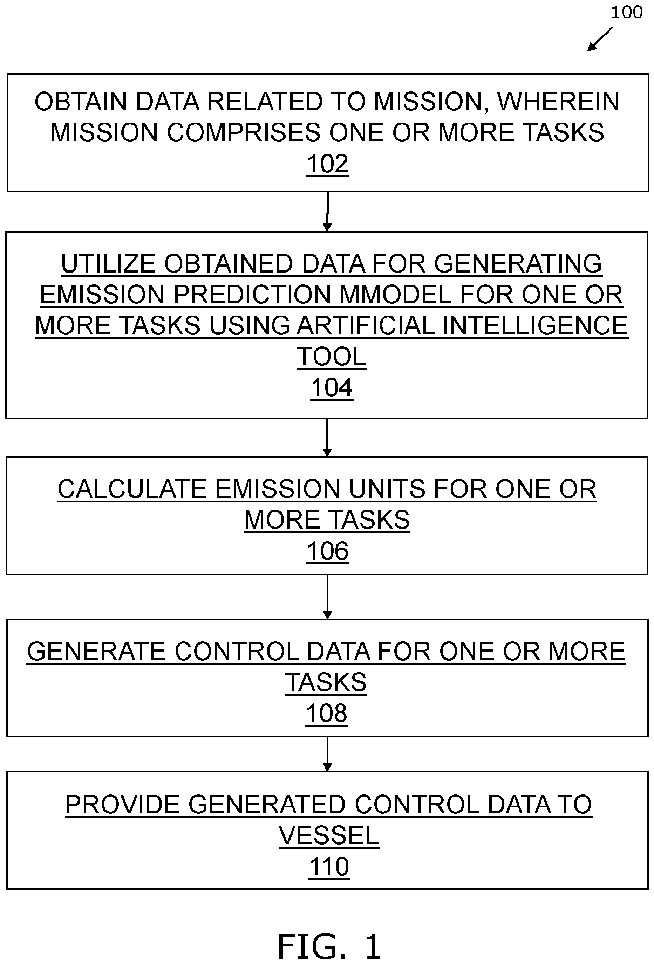

Referring to FIG. 1, illustrated is a flowchart depicting steps of a method for providing a mission specific control data to a vessel, in accordance with an embodiment of the present disclosure. At step **102,** data related to the mission is obtained, wherein the mission comprises one or more tasks. At step **104,** the obtained data is utilized for generating an emission prediction model for the one or more tasks using an artificial intelligence (AI) tool. The artificial intelligence (AI) tool has been trained using at least one of: historical emission data of a previous task, emission data obtained during the one or more tasks, a historical environmental profile associated with the previous task, and a vessel profile. At step **106,** emission units for the one or more tasks are calculated, wherein the emission units are calculated based on at least one of: a profile of each task from amongst the one or more tasks, the vessel profile, a predicted environmental profile associated with each of the one or more tasks, the emission data obtained during the one or more tasks. At step **108,** control data for the one or more tasks is generated, wherein the control data is generated based on at least one of: the generated emission prediction model, the calculated emission units. At step **110,** the generated control data is provided to the vessel.

The aforementioned steps are only illustrative and other alternatives can also be provided where one or more steps are added, one or more steps are removed, or one or more steps are provided in a different sequence without departing from the scope of the claims herein.

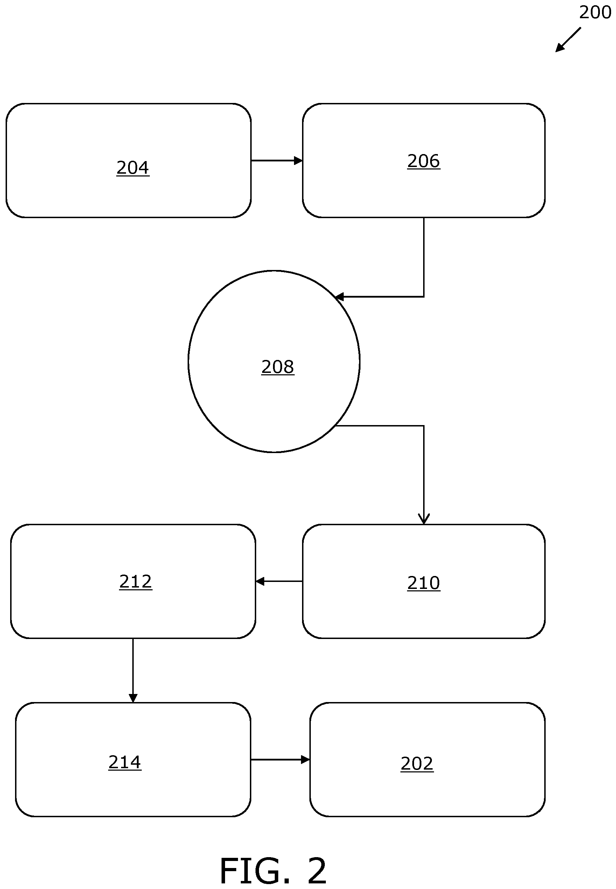

Referring to FIG. 2, illustrated is a block diagram of a system **200** to provide a mission specific control data to a vessel **202,** in accordance with an embodiment of the present disclosure. As shown, the system comprises a logistics data platform **204,** an artificial intelligence tool **206,** a calculating unit **208,** a control data generating unit **210,** and a communication arrangement **212.**

The logistics data platform **204** is configured for providing data related to the mission. The artificial intelligence tool **206** is configured to obtain the data related to the mission and utilize the obtained data to generate an emission prediction model. The calculating unit **208** is configured to calculate emission units. The control data generating unit **210** is configured to generate control data based on at least one of: the generated emission prediction model, the calculated emission units. The communication arrangement **212** is configured to communicate the control data to the vessel **202.**

The system **200** further comprises a vessel computing unit **214** that is used to operate the vessel **202** based on the control data.

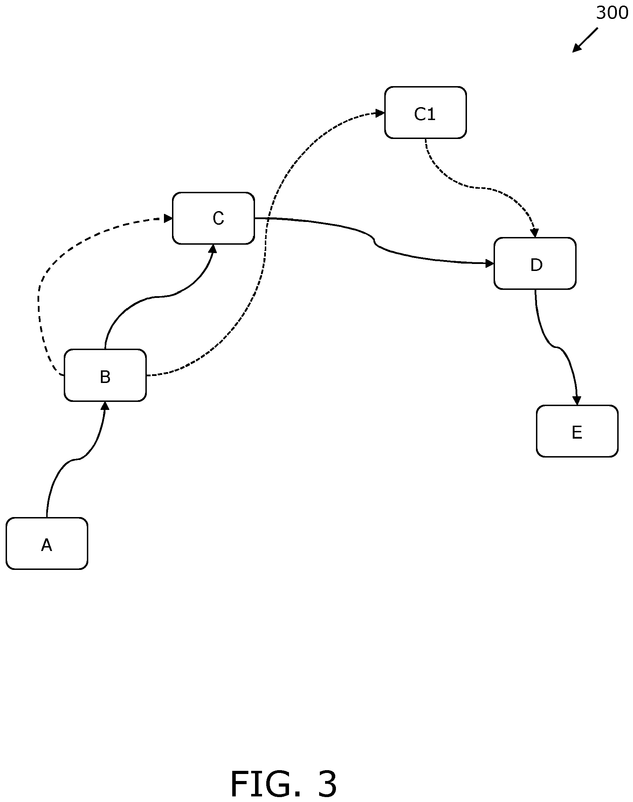

Referring to FIG. 3, illustrated is an exemplary illustration **300** of a mission of sailing a vessel from a departure location **A** to a destination location **E,** in accordance with an embodiment of the present disclosure. The vessel begins the mission (or sail or a predicted or planned route thereof) from the departure location **A** towards the destination location **E** via multiple points, namely **B, C/C1** and **D.** At point **B,** the vessel takes a planned or unplanned stop on the sea. When the vessel waits at the point **B,** the engine of the vessel consumes a certain amount of emission units which may be required during the mission to provide the mission specific control data to the vessel. At point **C** or **C1,** the vessel, travelling from point **B,** anchors at the sea for a certain duration of time. In such a case, during anchoring the vessel uses fuel and generates emissions, requiring additional emission units. Herein, the system can suggest the best anchoring location and duration to minimize the emissions. The system might propose an alternative route (depicted as dashed lines) from the point **B** to the point **C** to further reduce the emissions. The system might propose an alternative anchoring point **C1** (depicted as dotted lines) to reach from the point **B** to further reduce the emissions. At point **D,** the vessel is docked for a certain duration of time for a task, such as loading/unloading and other services. Besides the emission units required by the vessel, said tasks also require additional emission units. At point **E,** the mission of the vessel is completed.

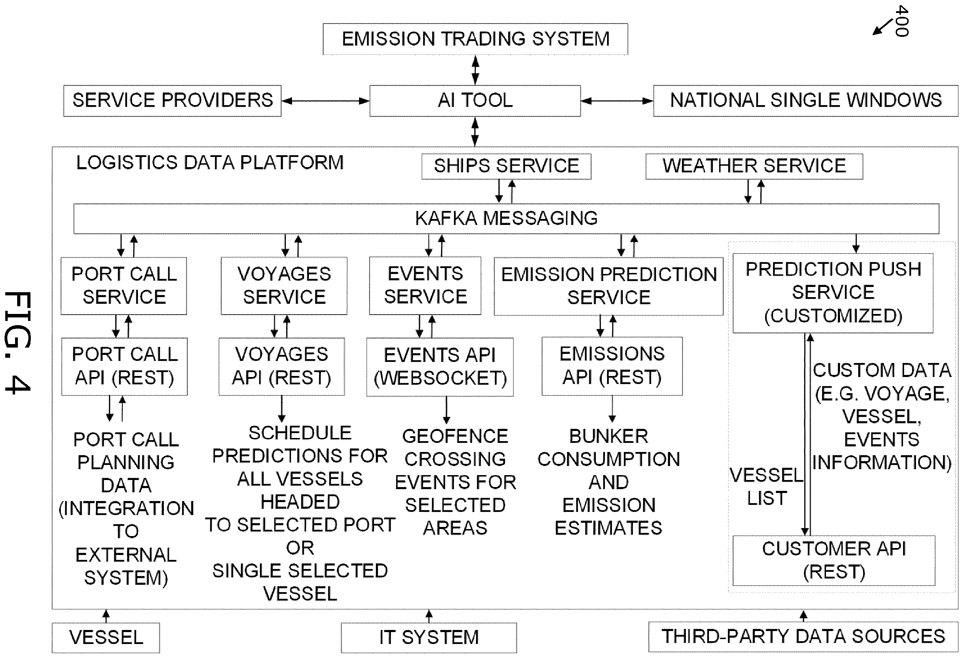

Referring to FIG. 4, illustrated is an illustration of an exemplary environment **400** of a system to provide a mission specific control data to a vessel, in accordance with an embodiment of the present disclosure. As shown, a logistics data platform is communicably coupled with an artificial intelligence tool. The logistics data platform receives data related to the mission from data sources such as the vessels (namely, data feeds from the vessels), existing logistics IT systems and third party data sources. The received data is provided by the logistics data platform to the artificial intelligence tool. The artificial intelligence tool utilizes the obtained data from the logistics data platform to generate an emission prediction model. The artificial intelligence tool is connected to service providers, an emission trading system and a National Single Windows for managing the selected task of the vessel and/or controlling the vessel.

## Claims

1. A method for providing a mission specific control data to a vessel (202), the method comprising:
- obtaining data related to the mission, wherein the mission comprises one or more tasks;
- utilizing the obtained data for generating an emission prediction model for the one or more tasks using an artificial intelligence (AI) tool (206), which has been trained using at least one of: historical emission data of a previous task, emission data obtained during the one or more tasks, a historical environmental profile associated with the previous task, and a vessel profile;
- calculating emission units for the one or more tasks, wherein the emission units are calculated based on at least one of: a profile of each task from amongst the one or more tasks, the vessel profile, a predicted environmental profile associated with each of the one or more tasks, the emission data obtained during the one or more tasks;
- generating control data for the one or more tasks, wherein the control data is generated based on at least one of: the generated emission prediction model, the calculated emission units; and
- providing the generated control data to the vessel.

2. A method according to claim 2, wherein the data related to the mission comprises at least one of: departure location, destination location, target arrival time to the destination location, target departure time from the departure location, needed time in the destination location, logistics support needed during the time in the destination location.

3. A method according to claim 1 or 2, wherein the mission comprises sailing the vessel (202) from the departure location to the destination location.

4. A method according to any of the preceding claims, wherein the method comprises dynamically updating the control data during the mission.

5. A method according to any of the preceding claims, wherein the method comprises linking the calculated emission units to an emission trading system.

6. A method according to claim 5, wherein the method comprises pre-reserving a pre-defined amount of emission units, from the emission trading system, for the selected task.

7. A method according to claim 6, wherein, after completing the selected task, the method further comprises confirming to the emission trading system that the pre-reserved emission units have been used.

8. A method according to any of the preceding claims, wherein the method comprises utilizing the generated control data for at least one of: managing the selected task of the vessel (202), controlling the vessel.

9. A method according to any of the preceding claims, wherein the method comprises:
- forecasting, using the emission prediction model, emission units for at least one task, and
- generating one or more proposals, to optimize the emission units usage, based on the forecasted emission units.

10. A method according to any of the preceding claims, wherein the method comprises automatically optimizing and pre-reserving the emission units.

11. A method according to any of the preceding claims, wherein the method comprises optimizing and pre-reserving the emission units prior to execution of the one or more tasks of the mission.

12. A method according to any of the preceding claims, wherein the method comprises generating the emission prediction model by utilizing at least one of: fuel consumption of the vessel (202), speed of the vessel, emission factor associated with the vessel.

13. A method according to any of the preceding claims, wherein the method comprises measuring the fuel consumption of the vessel (202) and the speed of the vessel in real-time.

14. A method according to any of the preceding claims, wherein the method comprises selecting the one or more tasks having the least emission units.

15. A method according to any of the preceding claims, wherein the emission units are CO₂ emission units.

16. A computer program product comprising a non-transitory machine readable data storage medium having stored thereon program instructions that, when executed by a processor, cause the processor to execute steps of a method of any of claims 1- 15.

17. A system (200) to provide a mission specific control data to a vessel (202), the system comprising:
- a logistics data platform (204) for providing data related to the mission;
- an artificial intelligence tool (206) configured to obtain the data related to the mission and utilize the obtained data to generate an emission prediction model;
- a calculating unit (208) to calculate emission units;
- a control data generating unit (210) to generate control data based on at least one of: the generated emission prediction model, the calculated emission units, and
- a communication arrangement (212) to communicate the control data to the vessel.

18. A system (200) according to claim 17, wherein the control data is used to operate the vessel (202) with a vessel computing unit (214).
